# EUROPEAN PATENT SPECIFICATION

(11) **EP 1 700 723 B1**
(45) Date of publication and mention of the grant of the patent: **10.10.2007**
(21) Application number: 05425150.9
(22) Date of filing: 11.03.2005
(51) Int. Cl.: B60H 1/00

(54) **Air treatment assembly for vehicles with an improved gasket for the fireproof wall**
Luftbehandlungvorrichtung für Kraftfahrzeuge mit verbessertem Stirnwandanschlussstück
Dispositif de traitement de l'air pour véhicule avec élément d'attache amélioré pour la cloison pare-feu

(43) Date of publication of application: 13.09.2006
(73) Proprietor: DENSO THERMAL SYSTEMS S.p.A., 10046 Poirino (Torino) (IT)
(72) Inventor: Balzo, Michele, c/o Denso Thermal Systems S.p.A., 10046 Porino (Torino) (IT); Bergamo, Luca, c/o Denso Thermal Systems S.p.A., 10046 Porino (Torino) (IT); Carbone, Andrea, c/o Denso Thermal Systems S.p.A., 10046 Porino (Torino) (IT); Nalon, Massimo, c/o Denso Thermal Systems S.p.A., 10046 Porino (Torino) (IT)
(74) Representative: Marchitelli, Mauro

(56) References cited:
- EP-A- 1 306 243
- DE-A1- 10 226 075
- FR-A- 2 538 320
- PATENT ABSTRACTS OF JAPAN vol. 014, no. 071 (M-0933), 9 February 1990 (1990-02-09) & JP 01 289714 A (HITACHI LTD; others: 01), 21 November 1989 (1989-11-21)

## Description

The present invention relates to an air treatment assembly for vehicles according to the preamble of claim 1.

The air treatment assembly of a vehicle comprises an outer case made of rigid plastic material in which are housed a heat exchanger for heating the air flow and an evaporator for cooling and dehumidifying the air flow. The heat exchanger and the evaporator are provided with tubes for the entry and exit of the respective thermal exchange fluids. These tubes extend through an opening in a wall that separates the engine compartment from the passenger compartment of the vehicle. Said wall is generally called "firewall". The air treatment assembly is usually provided with a sealing element situated outside the case and is mounted at the opening of the firewall to prevent water, fumes or gases present in the engine compartment from entering the passenger compartment. The sealing element has a body of elastomeric material in which openings for the passage of the tubes are formed.

EP 1 306 243, which is considered as the closest prior art, discloses such an air treatment assembly.

The object of the present invention is to provide an improved sealing element for an assembly of the kind defined above.

According to the present invention, said object is achieved thanks to the characteristics of claim 1.

The present invention shall now be described in detail with reference to the accompanying drawings, provided purely by way of non limiting example, in which:
- Figure 1 is a front elevation view of an air treatment assembly according to the present invention,
- Figure 2 is a section according to the line II-II of Figure 1,
- Figure 3 is a section according to the line III-III of Figure 2,
- Figure 4 is a plan view of a sealing element according to the invention indicated by the arrow IV in Figure 1, and
- Figure 5 is a section according to the line V-V of Figure 4.

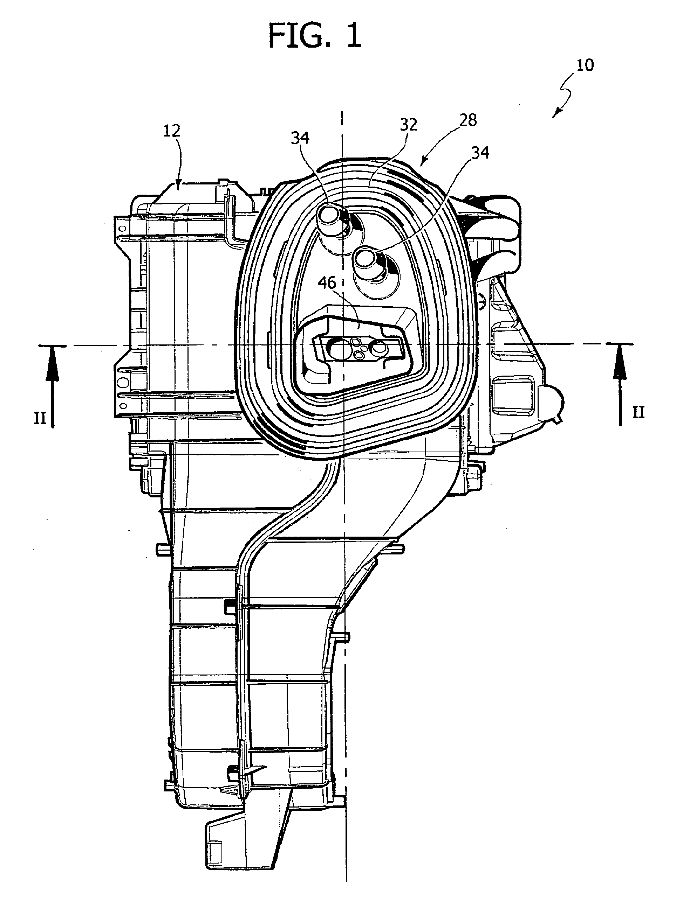

With reference to Figure 1, the number 10 designates an air treatment assembly system for vehicles according to the present invention. The assembly 10 comprises a case 12 made of rigid plastic material inside which are housed, in known fashion, a heat exchanger for heating an air flow and an evaporator for cooling and dehumidifying the air flow. The case 12 contains conduits for mixing and distributing the air flow as well as the valve elements whereby the temperature and the direction of exit of the air flow are regulated. Moreover, in the case 12 is housed, also in known fashion, a fan assembly which produces the air flow that is made to pass through the evaporator and the heater. The arrangement of the heater, of the evaporator, of the fan assembly and of the ventilation conduits inside the case 12 has not been described in detail because it belongs to the prior art and it lies outside the scope of the present invention.

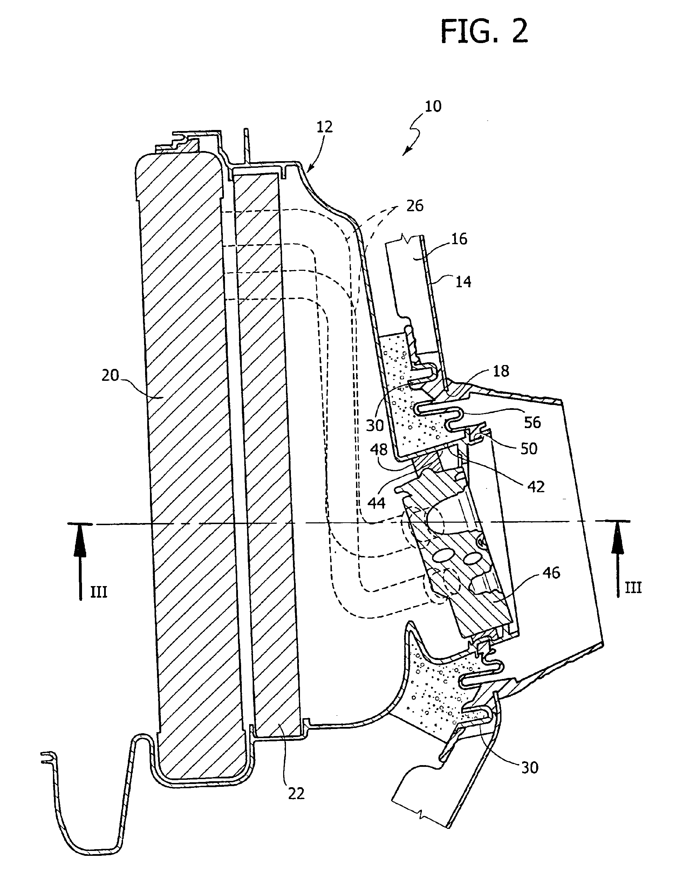

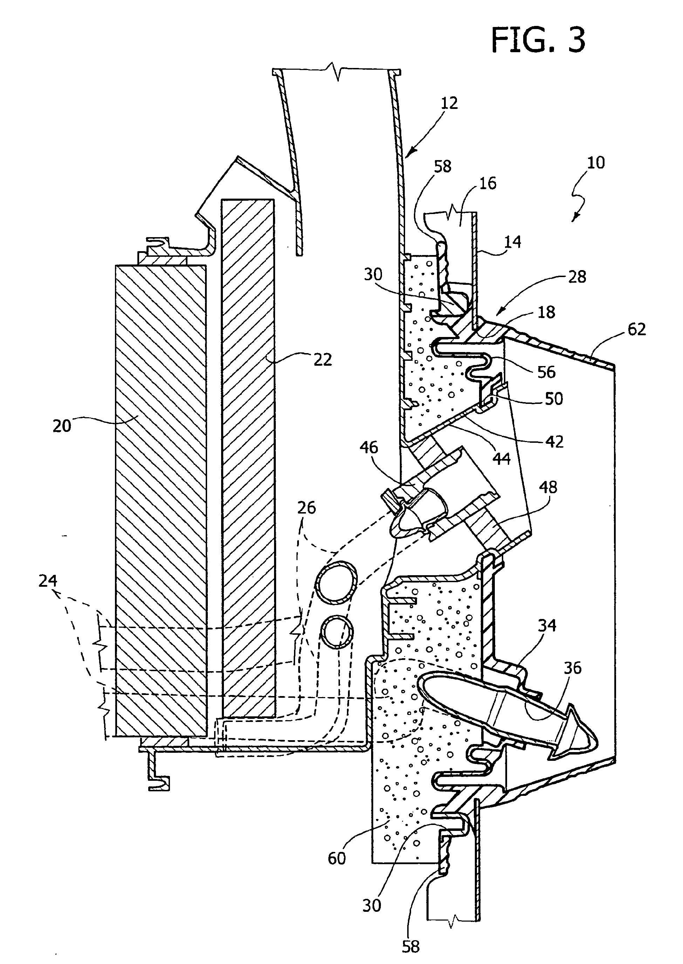

In Figures 2 and 3, the reference number 14 designates a firewall of a vehicle, which separates the engine compartment from the passenger compartment of the vehicle. The firewall 14 is constituted by a metal plate and it is provided on its surface oriented towards the passenger compartment of the vehicle with a layer of sound-proofing material 16. The air treatment assembly 10 is mounted in proximity to the firewall 14, on the side of the passenger compartment of the vehicle. The firewall 14 has an opening 18 for the passage of the tubes that feed the heat exchange fluids to the evaporator and to the heater of the assembly 10. In Figures 2 and 3, the evaporator of the assembly 10 is schematically indicated with the reference number 20. The heater is not shown. In Figures 2 and 3, the reference number 22 designates an air filter positioned parallel to the evaporator 20. The feed and discharge tubes of the heater are designated by the reference number 24 in Figure 3. The feed and discharge tubes of the evaporator 20 are designated by the reference number 26 in Figures 2 and 3.

A sealing element 28 is mounted at the opening 18 of the firewall 14. The sealing element 28 has the purpose of preventing water, fumes, gases, dusts or other substances from entering the passenger compartment of the vehicle.

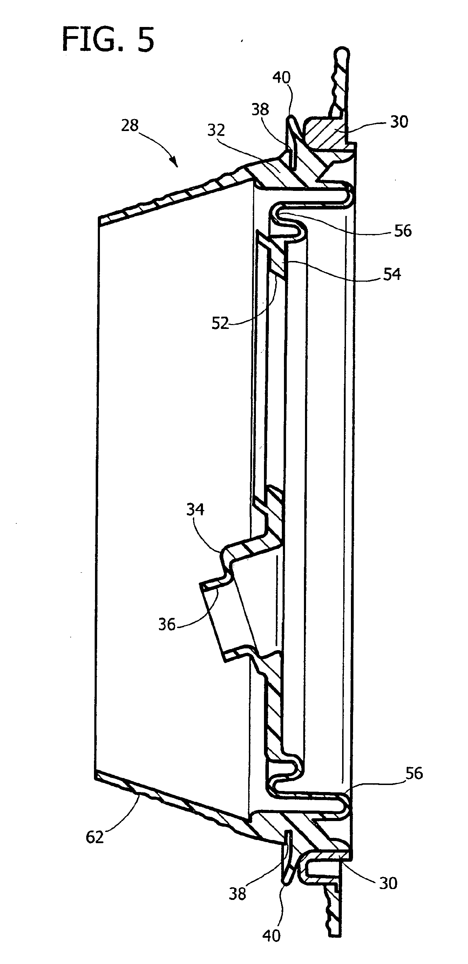

With reference in particular to Figure 5, the sealing element 28 according to the present invention comprises a support member 30 made of rigid plastic material with a substantially annular shape whereon is co-moulded a body 32 made of elastomeric material, e.g. Santoprene. The body made of elastomeric material 32 and the support member 30 of rigid plastic material form a monolithic set and are not separable without destroying the sealing element 28. The body made of elastomeric material 32 and the support member 30 are fastened by superficial adhesion during the over-moulding of the elastomeric.material 32. Preferably, the sealing element 28 is obtained with a bi-injection technique which provides for injecting in a same mould first the rigid plastic material forming the support member 30 and, after an at least partial solidification of the material forming the support member 30, the over-injection of injectable elastomeric material which forms the body 32.

The body made of elastomeric material 32 has two integral collars 34 with respective openings 36, serving for the passage of the tubes 24 of the heater. The edges of the openings 36 adhere to the outer walls of the tubes 24.

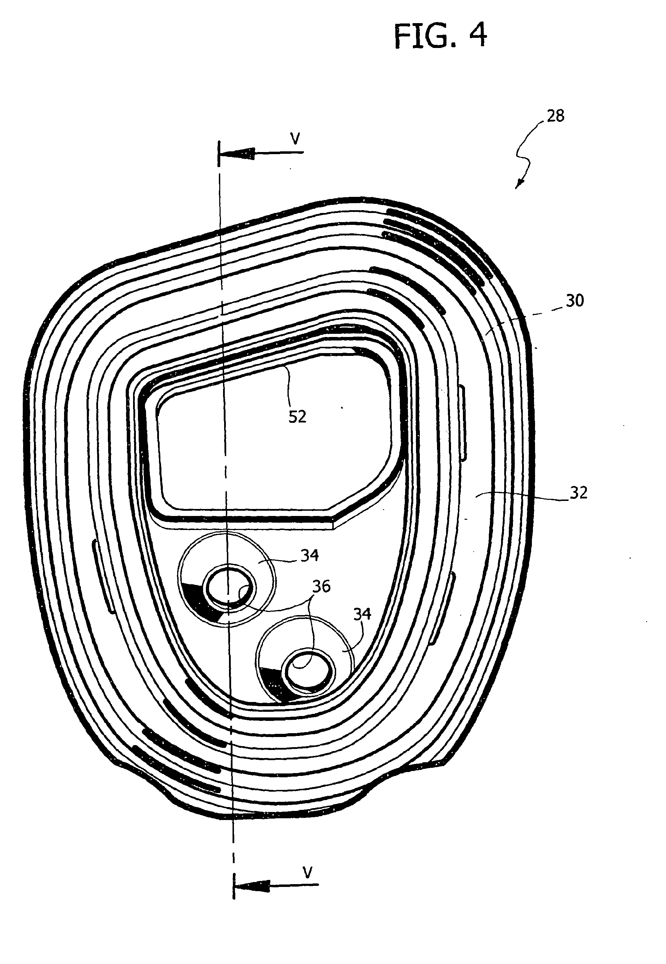

With reference again to Figures 4 and 5, the body of elastomeric material 32 of the sealing element 28 has an annular groove 38 open towards the exterior of the sealing element 28 and receives an edge of the firewall 14 adjacent to the opening 18. The body 32 further comprises a lip 40 adjacent to the annular groove 38 which in use presses against a portion of the firewall 14 oriented towards the passenger compartment of the vehicle that is not covered by the layer of sound-proofing material 16 (see also Figures 2 and 3).

With reference to Figures 2 and 3, the outer case 12 of the body 10 has a tubular projecting portion 42 forming an opening 44 which puts the inner volume of the case 12 in communication with the exterior environment. In use, the tubular portion 42 extends through the opening 18 of the firewall 14. In the opening 44 is housed an expansion valve 46 whereto are connected the tubes 26 of the evaporator 20. The expansion valve 46 is connected to the inner wall of the tubular portion 42 through a gasket 48 made of EPDM. The tubular portion 42 of the case 12 has on its outer surface a groove 50. The body 32 of elastomeric material of the sealing element 28 has an opening 52 with a shape that corresponds to that of the tubular portion 42. The edge 54 of the opening 52 engages the outer groove 50 of the tubular portion 42. The central part of the body 32 made of elastomeric material bearing the opening 52 and the collars 34 is connected to the peripheral part of the body 32 through a bellows portion 56 which allows to compensate the play in the positioning of the case 12 relative to the firewall 14.

The body of elastomeric material 32 of the sealing element 28 also has a radial lip 58 which extends beyond the support member made of rigid plastic material 30. In use, the radial lip 58 bears against an inner surface of the layer of sound-proofing material 16. A sound-proofing gasket made of polyurethane 60 is positioned between the sealing element 28 and the case 12. The body of elastomeric material 32 is also provided with a cone frustum shaped lip 62. The purpose of the lip 62 is to cause, during the installation of the dashboard module (complete with air conditioning assembly) in the vehicle, the sealing element 28 always to be able to correctly engage the hole 18 of the firewall 14, compensating the tolerances of the mounting equipment.

## Claims

1. Air treatment assembly for vehicles comprising:
- an outer case (12) made of rigid plastic material,
- a heat exchanger for heating and an evaporator (20) housed in the outer case (12) and provided with respective tubes (24, 26) for the entry and the exit of the respective heat exchange fluids extending outside the case (12), and
- a sealing element (28) situated outside the case (12) and provided with a body made of elastomeric material (32) provided with openings (36, 52) for the passage of said tubes (24, 26), the sealing element (28) being destined to be mounted at an opening (18) in a wall (14) which separates the engine compartment from the passenger compartment of the vehicle,
**characterised in that** said sealing element (28) comprises a reinforcing member (30) made of rigid plastic material whereon said body of elastomeric material is over-moulded.

2. Air treatment assembly as claimed in claim 1, **characterised in that** the reinforcing member (30) and the body of elastomeric material (32) are obtained by means of bi-injection.

3. Air treatment assembly as claimed in claim 1, **characterised in that** the body (32) made of elastomeric material has an opening (52) with an edge (54) which engages an outer groove (50) of a tubular portion (42) of the case (12) within which is housed an expansion valve (46).

4. Air treatment assembly as claimed in claim 1, **characterised in that** the body made of elastomeric material (32) has a pair of collars (34) provided with respective openings (36) through which extend the tubes (24) of the heater.

5. Air treatment assembly as claimed in claim 4, **characterised in that** the body made of elastomeric material (32) has a central portion bearing said opening (52) and said collars (34) connected to a peripheral portion of the body (32) by means of a bellows portion (56).

6. Air treatment assembly as claimed in claim 1, **characterised in that** the body made of elastomeric material (32) has an outer groove (38) to be engaged by an edge of the opening (18) of said wall (14).

## Patentansprüche

1. Luftaufbereitungssystem für Fahrzeuge, das Folgendes umfasst:
- ein Außengehäuse (12) aus starrem Kunststoffmaterial,
- einen Wärmetauscher zum Erwärmen und einen Verdampfer (20), der im Außengehäuse (12) untergebracht und mit jeweiligen sich aus dem Gehäuse (12) nach außen erstreckenden Rohrleitungen (24, 26) zum Ein- und Auslass der jeweiligen Wärmetauscherflüssigkeiten versehen ist, und
- ein Dichtungselement (28), das sich außerhalb des Gehäuses (12) befindet und mit einem Körper (32) aus Elastomermaterial versehen ist, der mit Öffnungen (36, 52) zum Durchtritt der Rohrleitungen (24, 26) versehen ist, wobei das Dichtungselement (28) dazu bestimmt ist, an einer Öffnung (18) in einer Wand (14) angebracht zu werden, die den Motorraum von der Fahrgastzelle des Fahrzeugs trennt,
**dadurch gekennzeichnet, dass** das Dichtungselement (28) ein aus starrem Kunststoffmaterial bestehendes Verstärkungsteil (30) umfasst, auf welches der Körper aus Elastomermaterial aufgeformt ist.

2. Luftaufbereitungssystem nach Anspruch 1, **dadurch gekennzeichnet, dass** das Verstärkungsteil (30) und der Körper (32) aus Elastomermaterial mittels Zweikomponenten-Spritzguss erhalten werden.

3. Luftaufbereitungssystem nach Anspruch 1, **dadurch gekennzeichnet, dass** der Körper (32) aus Elastomermaterial eine Öffnung (52) mit einem Rand (54) hat, der in eine Außenauskehlung (50) eines rohrförmigen Abschnitts (42) des Gehäuses (12) eingreift, in dem ein Expansionsventil (46) untergebracht ist.

4. Luftaufbereitungssystem nach Anspruch 1, **dadurch gekennzeichnet, dass** der Körper (32) aus Elastomermaterial zwei Ansätze (34) umfasst, die mit jeweiligen Öffnungen (36) versehen sind, durch die sich die Rohrleitungen (24) der Heizvorrichtung erstrecken.

5. Luftaufbereitungssystem nach Anspruch 4, **dadurch gekennzeichnet, dass** der Körper (32) aus Elastomermaterial einen mittleren Abschnitt hat, der die Öffnung (52) und die Ansätze (34) trägt, und der mittels eines Balgabschnitts (56) mit einem Umfangsabschnitt des Körpers (32) verbunden ist.

6. Luftaufbereitungssystem nach Anspruch 1, **dadurch gekennzeichnet, dass** der Körper (32) aus Elastomermaterial eine Außenauskehlung (38) hat, in die ein Rand der Öffnung (18) der Wand (14) eingreifen soll.

## Revendications

1. Ensemble de traitement de l'air destiné à des véhicules comprenant :
- un boîtier externe (12) constitué d'un matériau plastique rigide,
- un échangeur thermique destiné au réchauffage et un évaporateur (20) logé dans le boîtier externe (12) et muni de tubes respectifs (24, 26) destinés à l'entrée et à la sortie des fluides d'échange thermique respectifs s'étendant à l'extérieur du boîtier (12), et
- un élément d'étanchéité (28) situé à l'extérieur du boîtier (12) et muni d'un corps constitué d'un matériau élastomérique (32) pourvu d'ouvertures (36, 52) destinées au passage desdits tubes (24, 26), l'élément d'étanchéité (28) étant destiné à être monté au niveau d'une ouverture (18) dans une paroi (14) qui sépare le compartiment moteur de l'habitacle du véhicule,
**caractérisé en ce que** ledit élément d'étanchéité (28) comprend un élément de renfort (30) constitué d'un matériau plastique rigide sur lequel ledit corps en matériau élastomérique est surmoulé.

2. Ensemble de traitement de l'air selon la revendication 1, **caractérisé en ce que** l'élément de renfort (30) et le corps en matériau élastomérique (32) sont obtenus à l'aide d'une bi-injection.

3. Ensemble de traitement de l'air selon la revendication 1, **caractérisé en ce que** le corps (32) constitué d'un matériau élastomérique possède une ouverture (52) ayant un bord (54) qui engage une rainure extérieure (50) d'une partie tubulaire (42) du boîtier (12) dans laquelle est logé un détendeur (46).

4. Ensemble de traitement de l'air selon la revendication 1, **caractérisé en ce que** le corps constitué d'un matériau élastomérique (32) possède une paire de colliers (34) munis d'ouvertures respectives (36) par lesquelles s'étendent les tubes (24) du réchauffeur.

5. Ensemble de traitement de l'air selon la revendication 4, **caractérisé en ce que** le corps constitué d'un matériau élastomérique (32) possède une partie centrale supportant ladite ouverture (52) et lesdits colliers (34) reliée à une partie périphérique du corps (32) à l'aide d'une partie de soufflet (56).

6. Ensemble de traitement de l'air selon la revendication 1, **caractérisé en ce que** le corps constitué d'un matériau élastomérique (32) possède une rainure extérieure (38) destinée à coopérer avec un bord de l'ouverture (18) de ladite paroi (14).
